# EUROPEAN PATENT SPECIFICATION

(11) **EP 3 238 116 B1**
(45) Date of publication and mention of the grant of the patent: **26.05.2021**
(21) Application number: 15834639.5
(22) Date of filing: 17.12.2015
(51) Int. Cl.: G06F 21/36

(54) **METHOD FOR GETTING A USER VALIDATION OF A KEY**
VERFAHREN ZUM ERHALT EINER BENUTZERVALIDIERUNG EINES SCHLÜSSELS
PROCÉDÉ POUR OBTENIR LA VALIDATION D'UN UTILISATEUR D'UNE CLÉ

(30) Priority: 23.12.2014 EP 14307174
(43) Date of publication of application: 01.11.2017
(73) Proprietor: ORANGE, 75015 Paris (FR)
(72) Inventor: FRANCIS, Lishoy, Chiswick London W4 5XF (GB); HEBBES, Luke, London SW13 0JD (GB)
(74) Representative: Plasseraud IP
(86) International application number: PCT/IB2015/002591
(87) International publication number: WO 2016/103046

(56) References cited:
- US-A1- 2009 158 039
- US-A1- 2014 372 754

## Description

### FIELD OF THE PRESENT SYSTEM:

The present invention relates generally to communication devices, and more precisely to validation by a user of a key used during pairing process between user equipments.

### BACKGROUND OF THE PRESENT SYSTEM:

User equipment like mobile device, tablets, or more generally electronic devices or computing devices comprising communication capabilities are nowadays quite common. With this proliferation of new technologies and the advancement of such user equipments, the user is presented with a choice of using multiple user equipments in a collaborative way. The user equipments may interact, establishing communications between themselves, in order to exchange data such as contents for example. In order to facilitate communications between two user equipments, these user equipments may be paired (or bonded, linked). Pairing is a process used in digital communications that helps set up an initial linkage (or pairing) between user equipments to allow communications between them. The most common example is used in Bluetooth, where the pairing process is used to link two user equipments with Bluetooth capabilities. This pairing process can be used for example to link a Bluetooth headset with a mobile phone. After completion of the pairing, the mobile phone may easily use the Bluetooth headset to render audio content. When a pairing process is launched between two user equipments, it is important to implement security rules to prevent the pairing to occur with a wrong user equipment or, even worse, without any consent from one of a user equipment owner. Another aspect of security rules is to prevent man in the middle attack. Indeed, when a first and a second user equipments launch a pairing process, it may be easy, without sufficient security rules, for a third user equipment - the attacker -to act as a man in the middle. The attacker makes independent pairing with the two user equipments and relays messages between the two of them in order to make them believe that they are talking directly to each other over a private connection, when in fact the entire conversation is controlled by the attacker, that is to say that all exchanges between the first and second user equipments are going through the third user equipment.

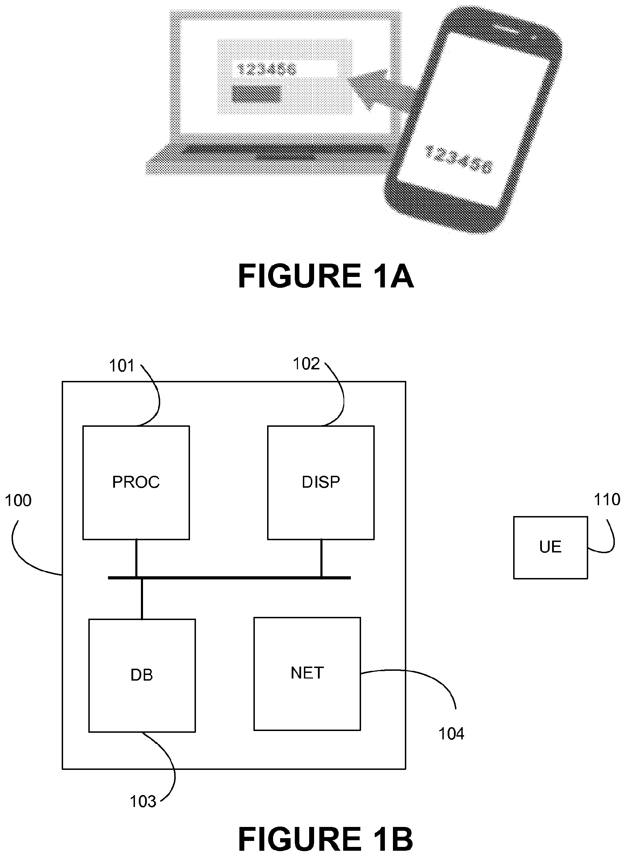

A traditional method of securing pairing process relies on a shared PIN code (Personal Identification Number). In a first method, illustrated in FIG. 1A, one of the two user equipments generates a key or PIN code and displays it on its screen. The user needs to enter the displayed key on the other user equipment in order to validate the pairing between the two user equipments. Quite often, reading the key on the first user equipment screen and entering it on the other user equipment is perceived as cumbersome by the users. In another method, to prevent the user from entering the key, the key is displayed on the screens of the two user equipments, the user is asked to confirm that the two keys are indeed equals on the two user equipments. But again, users find this verification step cumbersome and may just validate the key without giving much attention to the exact value of the keys displayed on each user equipment screen.

Thus, there is a need for a method for getting a user validation of a key that should be simple as to not being perceived cumbersome by the users, but that maintains an adequate level of security by not being bypassed by the users.

Examples and possible embodiments of the prior art may be found in US2014/372754 A1 that discloses a key exchange between two devices based on graphical images. Patent application US 2009/0158039 A1 discloses a key validation after key exchange between two devices by comparing a visual representation of the key rendered on both displays of the devices.

### SUMMARY OF THE PRESENT SYSTEM:

It is an object of the present system to overcome disadvantages and/or make improvements in the prior art.

Present document discloses a method for getting a user validation of a key stored on a user equipment using a graphical user interface (GUI) as claimed in claim 1. The method being carried out by a processor of the user equipment controlling the GUI and comprising the acts of associating to one or more graphical sub-elements to be rendered in a first graphical element of the GUI a parameter set at an initial value function of the key, generating the first graphical element comprising the one or more graphical sub-elements, each one of the graphical sub-elements being displayed with a parameter set to an altered value different from its initial value, the parameter being editable through one or more user inputs on said graphical sub-element, receiving user inputs on the one or more graphical sub-elements to edit its parameter, so as to generate a second graphical element on the GUI and wherein the validation of the key corresponds to the matching of the first and second graphical elements.

Advantageously, this method replaces a cumbersome task of key validation by a user friendly graphical validation. It also improves the security as this system is more robust against man in the middle attack that could use simple digit permutation of a displayed key in order to deceive an inattentive user.

In one complementary embodiment of present disclosure, the parameter corresponds to one of at least a position, a color or a form of a graphical sub-element.

Advantageously, alteration of parameters such as position form or color of the sub-elements allows intuitive and simple implementation of the present method. It present also the advantage of being compatible with most of the user equipments used today as it is based on parameters widely used. So an application program implementing the method can be coded to be compatible with most of the user equipments.

In one complementary embodiment of present disclosure, the act of generating the first graphical element comprises the preliminary acts of retrieving a predetermined stored graphical element, retrieving a predetermined partitioning model, the partitioning model allowing the breakdown of a graphical element into one or more sub-elements, generating the first graphical element comprising graphical sub-elements using the partitioning model on the retrieved graphical element and wherein the predetermined stored graphical element or the predetermined partitioning model is function of the key.

Advantageously, choosing a predetermined graphical element or a predetermined portioning model in function of the key improves the security of the system as it allows more diversity on the graphical element rendered on the GUI. It prevents the user from considering the validation of the key as a routine, thus validating the key without really any attention, as graphical element rendered shall be different from one validation to another, in function of the key to be validated.

In one complementary embodiment of present disclosure, the method is carried out by a processor of a first user equipment, the key corresponding to a shared secret key obtained upon performing a Diffie-Hellman key exchange with a second user equipment.

Advantageously, the method can be used to get the validation by the user of a key generated during a Diffie Hellman key exchange process conducted between two user equipments. This is improving the security of the Diffie Hellman key exchange process as it compensate for its weakness against man in the middle attack.

Another object of the disclosure concerns a system as defined in claim 5 comprising a first user equipment using a first graphical user interface (GUI), a second user equipment using a second graphical user interface (GUI) wherein, upon performing a key exchange between the first and second user equipment, a processor of the first user equipment controlling the first GUI executes the method as described hereinbefore and a processor of the second user equipment controlling the second GUI retrieves the predetermined stored graphical element to render it on the second GUI.

In one complementary embodiment of present disclosure, the key exchange is a Diffie-Hellman key exchange.

Another object of the disclosure concerns a user equipment using a graphical user interface (GUI), the user equipment comprising a processor controlling the GUI and adapted to associate to one or more graphical sub-elements to be rendered in a first graphical element of the GUI a parameter set at an initial value function of the authentication code, generate the first graphical element of the GUI comprising the one or more graphical sub-elements, each one of the graphical sub-elements being displayed with a parameter set to an altered value different from its initial value, the parameter being editable through one or more user inputs on said graphical sub-element, receive user inputs on the one or more graphical sub-elements to edit its parameter, so as to generate a second graphical element on the GUI and validate the authentication code when the first and second graphical elements match.

Another object of the invention concerns a computer program or application software as defined in claim 7, in particular computer programs on or in a non-transitory computer readable medium, suitable for getting a user validation of a key as disclosed in present document. These programs can use any programming language, and be in the form of source code, binary code, or of code intermediate between source code and object code such as in a partially compiled form, or in any other desirable form for implementing the methods according to the invention.

The information medium may be any entity or device capable of storing the software. For example, the medium can comprise a persistent or transient storage means, such as a ROM, for example a CD/DVD ROM or a microelectronic circuit ROM, or else a magnetic recording means, for example a diskette (floppy disk) or a hard disk or else a transient memory such as EEPROM, FLASH, SRAM and RAM.

### BRIEF DESCRIPTION OF THE DRAWINGS:

The invention is explained in further detail, and by way of example, with reference to the accompanying drawings wherein:
FIG. 1A shows an exemplary method of user validation as known by the man skilled in the art;
FIG. 1B shows an exemplary system comprising two user equipments according to one embodiment of present system;
FIG. 2 shows an exemplary flowchart of the method for getting a user validation of a key according to one embodiment of present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well-known devices, circuits, tools, techniques and methods are omitted so as not to obscure the description of the present system. It should be expressly understood that the drawings are included for illustrative purposes and do not represent the scope of the present system. In the accompanying drawings, similar reference numbers in different drawings may designate similar elements.

FIG. 1B is an exemplary system comprising a first user equipment 100 and a second user equipment 110 (in short, device) according to one embodiment of present system.

In this embodiment, the first user equipment 100 is typically a mobile phone, a tablet or any communication device. The user equipment 100 comprises for example a processor 101, a display device or screen 102, a network module 104 and possibly a database module 103. The database module 103 may store data or may be connected through a remote connection to others database hosted on servers not represented here. For simplicity sake, it shall be understood that the server 100 comprises a database, the database being either stored locally - the database module 103 -, or connected remotely through the network module 104.

The processor 101 of the user equipment 100 can control, either directly or via a graphical module not illustrated in FG. 1B, a graphical user interface (GUI) rendered on the screen 102. The GUI is adapted to render graphical elements, possibly comprising graphical sub-elements, that is to say graphical components that put together for the graphical element. Each graphical sub-element is characterized by various parameters, such as for example the position, the form or the color of the graphical sub-element. The user may interact with the GUI, either directly via user touch on the screen 102, the screen 102 being a touch screen or via pointing devices such as mouse, stylus or trackball connected or integrated to the user equipment 100. More generally, the user may interact with the GUI via any known method, such as for example registered gestures. The user can thus select and possibly edit a graphical sub-element. For example, the GUI can allow a user to select and move a graphical sub-element over the screen 102, or, via for example a user menu displayed on the GUI, modify the color of the graphical sub-element. In short, parameters of a graphical sub-element may be editable through one or more user inputs on said graphical sub-element.

The user equipment 100 comprises at least one network module 104. The network module 104 can integrate for example wireless technology such as *Bluetooth, ZigBee* or *Wi-Fi* (Wireless Fidelity). Such network module 104 allows in particular communication between the first device 100 and at least one user equipment 110. The user equipment 110 is similar to the user equipment 100, so description of user equipment 100 may be applied to user equipment 110.

Thus, the first user equipment 100 and the second user equipment 110 may be paired or bonded together. By pairing, it should be understood a process used in computer networking that helps set up an initial linkage between user equipment or computing devices to allow communications between them. In particular, the pairing process may comprise the establishment of a secured communication channel between the two user equipments 100 and 110.

The processor 101 of the user equipment 100 may execute a computer program implementing the method that shall be described hereafter. The method of present system may be executed by the processor 101 entirely or may be executed also partially by other modules of the user equipment 100.

The user equipment 100 may store locally any type of data, or connect to a server to retrieve data, as known to the man skilled in the art.

Thus, the user equipment 100 uses a graphical user interface (GUI) and comprises a processor 101 controlling the GUI. The processor 101 of the user equipment 100 (in short, the user equipment 100) is adapted for associating to one or more graphical sub-elements to be rendered in a first graphical element of the GUI a parameter set at an initial value function of the authentication code, generating the first graphical element of the GUI comprising the one or more graphical sub-elements, each one of the graphical sub-elements being displayed with a parameter set to an altered value different from its initial value, the parameter being editable through one or more user inputs on said graphical sub-element, receiving user inputs on the one or more graphical sub-elements to edit its parameter, so as to generate a second graphical element on the GUI and validating the authentication code when the first and second graphical elements match.

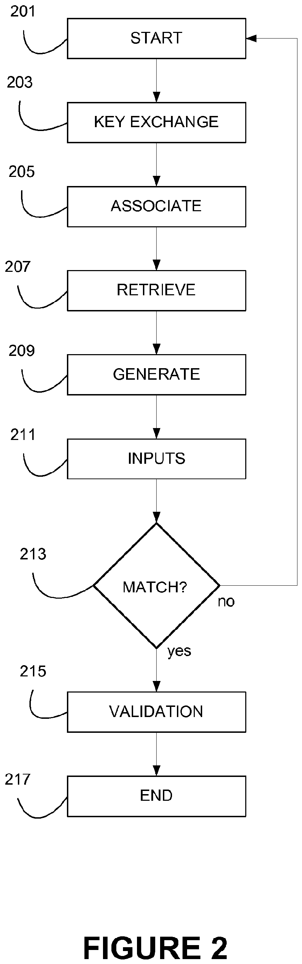

The flowchart of FIG. 2 illustrates an embodiment of the method for getting a user validation of a key in the specific context of a pairing process between a first and a second user equipment as illustrated in FIG. 1B. The two user equipments may belong to a same user, or may belong to two different users.

In any case, the user, or the users, may decide in a step 201 to initiate a pairing process of the two user equipments. Such pairing process may typically be performed using a Bluetooth network module 104. The pairing process may be executed on each user equipment by using a function integrated within the operating system of the user equipments or by using an application program, the application program being dedicated to the pairing process or comprising a pairing function to conduct the pairing process. In order to secure the future communications between the two user equipments a secure channel shall be established, such secure channels usually are based on a common secret key.

Protocols or methods such as Diffie-Hellman key exchange protocol as described in U.S. Patent 4,200,770 can be used. The Diffie-Hellman key exchange protocol or method allows two user equipments that have no prior knowledge of each other to jointly establish a shared secret key (in short, a key) over an insecure communication channel. This key is then be used to encrypt subsequent communications between the two user equipments using a symmetric key cipher.

A key exchange protocol such as the Diffie-Hellman method is executed between the two user equipments during a step 203.

Nevertheless, such protocol executed in step 203 presents a weakness to man in the middle attack, so a validation by the user(s) of the key obtained on the two user equipments is commonly implemented.

During a step 205, the first user equipment 100 associates to one or more graphical sub-elements to be rendered in a first graphical element of the GUI a parameter set at an initial value function of the key previously calculated in step 203. Thus, color or position of a graphical sub-element may be defined according to the value of the key or of a subpart of the key or of the resultant (in part or whole) of a function applied to the key.

In an optional step 207, the first user equipment 100 retrieves a predetermined stored graphical element, retrieves a predetermined partitioning model, the partitioning model allowing the breakdown of a graphical element into one or more sub-elements and generates a first graphical element comprising graphical sub-elements using the partitioning model on the retrieved graphical element wherein the predetermined stored graphical element or the predetermined partitioning model is function of the key. The predetermined stored graphical element and partitioning model can be stored within or accessed by the application program, the application program storing or being able to access to various predetermined graphical element and partitioning model.

If the step 207 is not executed, the first user equipment 100 may retrieve and use a predetermined graphical element as first graphical element.

In a step 209, the first user equipment 100 generates the first graphical element comprising the one or more graphical sub-elements, each one of the graphical sub-elements being displayed with a parameter set to an altered value different from its initial value, the parameter being editable through one or more user inputs on said graphical sub-element. In other words, the first user equipment 100 renders on its screen 102 the graphical element with the graphical sub-elements rendered in an altered way. For example, graphical sub-elements (or parts) of a graphical element (or image) may be altered by having a different color than the initial one. The position of said graphical sub-element (or parts) may be changed, displaying the graphical element (or image) as a jigsaw puzzle, composed by the graphical sub-elements, on the GUI rendered on the screen 102.

In parallel to the steps 205 to 209, after the step 203 of key exchange, the second user equipment 110 performs a similar method, except that the graphical element is rendered on its GUI on its screen without any alteration of the parameters of the graphical sub-elements. In other words, the graphical element is retrieved and rendered without any alteration on the second user equipment GUI.

Thus, the user(s) may see on the second user equipment 110 screen an un-altered version of the graphical element. This un-altered version of the graphical element may be visually compared by the user(s) to the altered version of the graphical element displayed on the screen of the first user equipment 100.

In a step 211, the user equipment 100 receives user inputs on the one or more graphical sub-elements to edit its parameter, so as to generate a second graphical element on the GUI. The user, by looking at the graphical element rendered on the second user equipment 110 screen, can indeed, either via user inputs on the touch screen 102 if the screen 102 comprises a touch interface, or via a pointing device, edit the different graphical sub-elements rendered on the GUI of the first user equipment 100 in order to try to reconstitute the first graphical element.

In cases of man in the middle attack or unsolicited pairing request, the user will see a different graphical element displayed on the other user equipment or won't have access to the graphical element displayed on the other user equipment screen. So the user will not be able to reconstitute the graphical element.

In a step 213, the reconstituted graphical element (or second graphical element obtained after the user inputs in step 211) and the first graphical element are matched. If they do not match, then the validation of the key is considered failed and the pairing process may be aborted or repeated from step 203.

If the two graphical element match, in a step 215, then the key is considered validated, meaning that the user has validated that the two user equipments 100 and 110 share a same common secret key. Further secure communication channel may be established for example based on this common secure key. This process may be repeated every time the two user equipments need to communicate, or may be executed only one time during the first pairing process.

The application program may be stopped in a further step 217 once the communication between the two user equipment is terminated.

Finally, the above discussion is intended to be merely illustrative of the present system and should not be construed as limiting the appended claims to any particular embodiment or group of embodiments. The invention is defined by the appended claims.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated;
i) the term "plurality of" an element includes two or more of the claimed element, and does not imply any particular range of number of elements; that is, a plurality of elements may be as few as two elements, and may include an immeasurable number of elements, and;
j) the term "greater than" (respectively "lower than") should be understood as "strictly greater than" (resp. "strictly lower than") or "greater than or equal to" (resp. "lower than or equal to"), both implementation being possible unless specifically indicated.

## Claims

1. A method for getting a user validation of a key stored on a user equipment using a graphical user interface, GUI, the method being carried out by a processor of the user equipment controlling the GUI and comprising the acts of:
- executing (203) a key exchange protocol with another user equipment,
- associating (205) to one or more graphical sub-elements to be rendered in a first graphical element of the GUI a parameter set at an initial value function of the key,
- generating (209) another graphical element on the GUI comprising the one or more graphical sub-elements, each one of the graphical sub-elements being displayed with a parameter set to an altered value different from its initial value, the parameter being editable through one or more user inputs on said graphical sub-element,
- receiving (211) user inputs on the one or more graphical sub-elements to edit its parameter by the user of the user equipment looking at a graphical element rendered on the another user equipment screen, so as to generate a second graphical element on the GUI,
wherein the validation of the key corresponds to the matching (213) of the first and second graphical elements, and wherein the graphical element being rendered on the another user equipment is equal to the first graphical element such that the parameter of the one or more graphical sub-elements to be rendered in the graphical element rendered on the another user equipment are set at the initial value function of the key.

2. The method according to claim 1, the parameter corresponding to one of at least a position, a color or a form of a graphical sub-element.

3. The method according to one of the previous claim, the act of generating the another graphical element comprising preliminary acts of:
- retrieving the first graphical element,
- retrieving a predetermined partitioning model, the partitioning model allowing the breakdown of a graphical element into one or more sub-elements,
- generating the another graphical element comprising graphical sub-elements using the partitioning model on the retrieved first graphical element,
wherein the first graphical element or the predetermined partitioning model is function of the key.

4. The method according to one of the previous claim, the method being carried out by a processor of a first user equipment, the key corresponding to a shared secret key obtained upon performing a Diffie-Hellman key exchange with a second user equipment.

5. A system comprising:
- a first user equipment (100) using a first graphical user interface, GUI,
- a second user equipment (110) using a second graphical user interface, GUI,
wherein, upon performing a key exchange between the first and second user equipment:
a processor of the first user equipment controlling the first GUI executes the acts of:
- executing a key exchange protocol with the second user equipment,
- associating to one or more graphical sub-elements to be rendered in a first graphical element of the first GUI a parameter set at an initial value function of the key,
- generating another graphical element on the first GUI comprising the one or more graphical sub-elements, each one of the graphical sub-elements being displayed with a parameter set to an altered value different from its initial value, the parameter being editable through one or more user inputs on said graphical sub-element,
- receiving user inputs on the one or more graphical sub-elements to edit its parameter by the user of the user equipment looking at a graphical element rendered on the second user equipment screen, so as to generate a second graphical element on the GUI,
- a processor of the second user equipment controlling the second GUI retrieves a graphical element to render it on the second GUI, wherein the graphical element on the second user equipment is equal to the first graphical element such that the parameter of the one or more graphical sub-elements to be rendered in the graphical element on the second user equipment are set at the initial value function of the key, and
- wherein the validation of the key corresponds to the matching of the first and second graphical elements.

6. A system according to previous claim, the key exchange being a Diffie Hellman key exchange.

7. An application program embodied on a non-transitory computer readable medium and arranged to execute the method of claims 1 to 4.

## Patentansprüche

1. Verfahren zum Erhalten einer Benutzervalidierung eines auf einem Benutzergerät gespeicherten Schlüssels unter Verwendung einer grafischen Benutzerschnittstelle, GUI, wobei das Verfahren durch einen die GUI steuernden Prozessor des Benutzergeräts ausgeführt wird und die folgenden Handlungen umfasst:
- Ausführen (203) eines Schlüsselaustauschprotokolls mit einem anderen Benutzergerät,
- Assoziieren (205), mit einem oder mehreren in einem ersten grafischen Element der GUI darzustellenden grafischen Teilelementen, eines auf eine Anfangswertfunktion des Schlüssels eingestellten Parameters,
- Erzeugen (209) eines anderen grafischen Elements auf der GUI, das das eine oder die mehreren grafischen Teilelemente umfasst, wobei jedes der grafischen Teilelemente mit einem Parameter, der auf einen sich von dessen Anfangswert unterscheidenden geänderten Wert eingestellt ist, angezeigt wird, wobei der Parameter mittels einer oder mehrerer Benutzereingaben auf dem grafischen Teilelement editierbar ist,
- Empfangen (211) von Benutzereingaben auf dem einen oder den mehreren grafischen Teilelementen zum Editieren dessen Parameters, indem der Benutzer des Benutzergeräts ein auf dem Bildschirm des anderen Benutzergeräts dargestelltes grafisches Element betrachtet, um ein zweites grafisches Element auf der GUI zu erzeugen,
wobei die Validierung des Schlüssels der Übereinstimmung (213) des ersten und des zweiten grafischen Elements entspricht, und wobei das auf dem anderen Benutzergerät dargestellte grafische Element dem ersten grafischen Element derart gleicht, dass der Parameter des einen oder der mehreren grafischen Teilelemente, die in dem auf dem anderen Benutzergerät dargestellten grafischen Element darzustellen sind, auf die Anfangswertfunktion des Schlüssels eingestellt sind.

2. Verfahren nach Anspruch 1, wobei der Parameter einer von zumindest einer Position, einer Farbe oder einer Form eines grafischen Teilelements entspricht.

3. Verfahren nach einem der vorhergehenden Ansprüche, wobei die Handlung des Erzeugens des anderen grafischen Elements folgende vorausgehende Handlungen umfasst:
- Abrufen des ersten grafischen Elements,
- Abrufen eines vorbestimmten Partitionierungsmodells, wobei das Partitionierungsmodell das Unterteilen eines grafischen Elements in ein oder mehrere Teilelemente ermöglicht,
- Erzeugen des anderen grafischen Elements, das grafische Teilelemente umfasst, unter Verwendung des Partitionierungsmodells auf dem abgerufenen ersten grafischen Element,
wobei das erste grafische Element oder das vorbestimmte Partitionierungsmodell eine Funktion des Schlüssels ist.

4. Verfahren nach einem der vorhergehenden Ansprüche, wobei das Verfahren durch einen Prozessor des ersten Benutzergeräts ausgeführt wird, wobei der Schlüssel einem gemeinsam genutzten geheimen Schlüssel entspricht, der bei Durchführen eines Diffie-Hellman-Schlüsselaustauschs mit einem zweiten Benutzergerät erhalten wird.

5. System, das Folgendes umfasst:
- ein ersten Benutzergerät (100), das eine erste grafische Benutzerschnittstelle, GUI, verwendet,
- ein zweites Benutzergerät (110), das eine zweite grafische Benutzerschnittstelle, GUI, verwendet,
wobei bei Durchführen eines Schlüsselaustauschs zwischen dem ersten und dem zweiten Benutzergerät:
ein die erste GUI steuernder Prozessor des ersten Benutzergeräts die folgenden Handlungen ausführt:
- Assoziieren, mit einem oder mehreren in einem ersten grafischen Element der ersten GUI darzustellenden grafischen Teilelementen, eines auf eine Anfangswertfunktion des Schlüssels eingestellten Parameters,
- Erzeugen eines anderen grafischen Elements auf der GUI, das das eine oder die mehreren grafischen Teilelemente umfasst, wobei jedes der grafischen Teilelemente mit einem Parameter, der auf einen sich von dessen Anfangswert unterscheidenden geänderten Wert eingestellt ist, angezeigt wird, wobei der Parameter mittels einer oder mehrerer Benutzereingaben auf dem grafischen Teilelement editierbar ist,
- Empfangen von Benutzereingaben auf dem einen oder den mehreren grafischen Teilelementen zum Editieren dessen Parameters, indem der Benutzer des Benutzergeräts ein auf dem Bildschirm des zweiten Benutzergeräts dargestelltes grafisches Element betrachtet, um ein zweites grafisches Element auf der GUI zu erzeugen,
- wobei ein die zweite GUI steuernder Prozessor des zweiten Benutzergeräts ein grafisches Element abruft, um es auf der zweiten GUI darzustellen, wobei das grafische Element auf dem zweiten Benutzergerät dem ersten grafischen Element derart gleicht, dass der Parameter des einen oder der mehreren grafischen Teilelemente, die in dem grafischen Element auf dem zweiten Benutzergerät darzustellen sind, auf die Anfangswertfunktion des Schlüssels eingestellt sind, und
- wobei die Validierung des Schlüssels der Übereinstimmung des ersten und des zweiten grafischen Elements entspricht.

6. System nach dem vorhergehenden Anspruch, wobei der Schlüsselaustausch ein Diffie-Hellman-Schlüsselaustausch ist.

7. Anwendungsprogramm, umgesetzt auf einem nichtflüchtigen computerlesbaren Medium und eingerichtet zum Ausführen des Verfahrens nach den Ansprüchen 1 bis 4.

## Revendications

1. Procédé d'obtention d'une validation utilisateur d'une clé mémorisée sur un équipement utilisateur à l'aide d'une interface utilisateur graphique, GUI, le procédé étant réalisé par un processeur de l'équipement utilisateur qui commande la GUI et comprenant les étapes suivantes :
- l'exécution (203) d'un protocole d'échange de clés avec un autre équipement utilisateur,
- l'association (205) à un ou plusieurs sous-éléments graphiques à restituer dans un premier élément graphique de la GUI, d'un paramètre fixé à une valeur initiale fonction de la clé,
- la génération (209) d'un autre élément graphique sur la GUI comprenant les un ou plusieurs sous-éléments graphiques, chacun des sous-éléments graphiques étant affiché avec un paramètre fixé à une valeur modifiée différente de sa valeur initiale, le paramètre pouvant être modifié par le biais d'une ou plusieurs entrées d'utilisateur sur ledit sous-élément graphique,
- la réception (211) d'entrées d'utilisateur sur les un ou plusieurs sous éléments-graphiques pour modifier leur paramètre par l'utilisateur de l'équipement utilisateur en regardant un élément graphique restitué sur l'autre écran d'équipement utilisateur, de manière à générer un second élément graphique sur la GUI,
dans lequel la validation de la clé correspond à la mise en correspondance (213) des premier et second éléments graphiques, et dans lequel l'élément graphique restitué sur l'autre équipement utilisateur est égal au premier élément graphique de telle sorte que le paramètre des un ou plusieurs sous-éléments graphiques à restituer dans l'élément graphique restitué sur l'autre équipement utilisateur soit fixée à la valeur initiale fonction de de la clé.

2. Procédé selon la revendication 1, le paramètre correspondant à une d'au moins une position, une couleur ou une forme d'un sous-élément graphique.

3. Procédé selon l'une des revendications précédentes, l'étape de génération de l'autre élément graphique comprenant des étapes préliminaires de :
- récupération du premier élément graphique,
- récupération d'un modèle de partitionnement prédéterminé, le modèle de partitionnement permettant la décomposition d'un élément graphique en un ou plusieurs sous-éléments,
- génération de l'autre élément graphique comprenant des sous-éléments graphiques à l'aide du modèle de partitionnement sur le premier élément graphique récupéré,
dans lequel le premier élément graphique ou le modèle de partitionnement prédéterminé est fonction de la clé.

4. Procédé selon l'une des revendications précédentes, le procédé étant mis en œuvre par un processeur d'un premier équipement utilisateur, la clé correspondant à une clé secrète partagée obtenue lors de l'exécution d'un échange de clés Diffie-Hellman avec un second équipement utilisateur.

5. Système comprenant :
- un premier équipement utilisateur (100) utilisant une première interface utilisateur graphique, GUI,
- un second équipement utilisateur (110) utilisant une seconde interface utilisateur graphique, GUI, dans lequel, lors de l'exécution d'un échange de clés entre les premier et second équipements utilisateur :
un processeur du premier équipement utilisateur qui commande la première GUI exécute les étapes suivantes :
- l'exécution d'un protocole d'échange de clé avec le second équipement utilisateur,
- l'association à un ou plusieurs sous-éléments graphiques à restituer dans un premier élément graphique de la première GUI d'un paramètre fixé à une valeur initiale fonction de de la clé,
- la génération d'un autre élément graphique sur la première GUI comprenant les un ou plusieurs sous-éléments graphiques, chacun des sous-éléments graphiques étant affiché avec un paramètre fixé à une valeur modifiée différente de sa valeur initiale, le paramètre pouvant être modifié par le biais d'une ou plusieurs entrées d'utilisateur sur ledit sous-élément graphique,
- la réception d'entrées d'utilisateur sur les un ou plusieurs sous éléments-graphiques pour modifier leur paramètre par l'utilisateur de l'équipement utilisateur en regardant un élément graphique restitué sur le second écran d'équipement utilisateur, de manière à générer un second élément graphique sur la GUI,
- la récupération par un processeur du second équipement utilisateur qui commande la seconde GUI d'un élément graphique pour le restituer sur la seconde GUI, l'élément graphique sur le second équipement utilisateur étant égal au premier élément graphique de telle sorte que le paramètre des un ou plusieurs sous-éléments graphiques à restituer dans l'élément graphique sur le second équipement utilisateur soit fixé à la valeur initiale fonction de la clé, et
- dans lequel la validation de la clé correspond à la mise en correspondance des premier et second éléments graphiques.

6. Système selon la revendication précédente, l'échange de clés étant un échange de clés Diffie Hellman.

7. Programme d'application incorporé sur un support non transitoire lisible par ordinateur et conçu pour exécuter le procédé selon les revendications 1 à 4.
